# EUROPÄISCHE PATENTSCHRIFT

(11) **EP 2 591 468 B1**
(45) Veröffentlichungstag und Bekanntmachung des Hinweises auf die Patenterteilung: **10.05.2023**
(21) Anmeldenummer: 11738162.4
(22) Anmeldetag: 06.07.2011
(51) Int. Cl.: G10K 11/00, G07D 7/08

(54) **ULTRASCHALLSENSOR FÜR WERTDOKUMENTE, WANDLERMODUL FÜR DIESEN UND VERFAHREN ZUR HERSTELLUNG DES ULTRASCHALLSENSORS**
ULTRASONIC SENSOR FOR VALUABLE DOCUMENTS, TRANSDUCER MODULE FOR SAID ULTRASONIC SENSOR, AND METHOD FOR PRODUCING THE ULTRASONIC SENSOR
CAPTEUR ULTRASONORE POUR DOCUMENTS DE VALEUR, MODULE DE TRANSDUCTEUR POUR CE CAPTEUR ET PROCÉDÉ DE FABRICATION D'UN CAPTEUR ULTRASONORE

(30) Priorität: 07.07.2010 DE 102010026341
(43) Veröffentlichungstag der Anmeldung: 15.05.2013
(73) Patentinhaber: Giesecke+Devrient Currency Technology GmbH, 81677 München (DE)
(72) Erfinder: LOHNER, Joseph, 81549 München (DE); MOOSLER, Hans-Uwe, 81929 München (DE); RAUSCH, Ernst, 84405 Dorfen (DE); BERNGEHIER, Walter, 82140 Olching (DE)
(74) Vertreter: Giesecke + Devrient IP
(86) Internationale Anmeldenummer: PCT/EP2011/003352
(87) Internationale Veröffentlichungsnummer: WO 2012/003974

(56) Entgegenhaltungen:
- US-A1- 2010 005 888

## Beschreibung

Die vorliegende Erfindung betrifft ein Ultraschallwandlermodul für einen Ultraschallsensor zur Detektion und/ oder Untersuchung von Wertdokumenten, einen Ultraschallsensor zur Detektion und/ oder Untersuchung von Wertdokumenten mit einem solchen Ultraschallwandlermodul sowie ein Verfahren zur Herstellung des Ultraschallsensors.

Unter Wertdokumenten werden dabei blatt- oder kartenförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

Bei der maschinellen Bearbeitung solcher Wertdokumente, insbesondere von Banknoten wird häufig Ultraschall eingesetzt. Ultraschall kann beispielsweise zur Detektion von Wertdokumenten, d.h. der Erkennung des Passierens eines Wertdokuments beim Transport, und/ oder zur Untersuchung von Wertdokumenten, beispielsweise zur Erkennung von sogenannten Doppelabzügen, d. h. unvollständig vereinzelten Wertdokumenten eines Wertdokumentstapels oder Bündels bzw. teilweise überlappend transportierten Wertdokumenten, und/ oder zur Erfassung von Ultraschalleigenschaften des Wertdokuments, beispielsweise zur Ermittlung des Zustands der Wertdokumente, eingesetzt werden. Dabei wird Ultraschall von einem Wandler zunächst in Luft eingekoppelt, breitet sich dann in der Luft aus, bis er gegebenenfalls auf ein Wertdokument trifft und wird dann von dem Wertdokument remittiert oder transmittiert. Der so von dem Wertdokument abgegebene Ultraschall kann dann wieder erfaßt werden. Aufgrund der notwendigen Einkopplung in Luft und der mit zunehmender Ultraschallfrequenz abnehmenden Einkoppeleffizienz wird meist kein sehr hochfrequenter Ultraschall verwendet. Unter Ultraschall wird im Rahmen der vorliegenden Anmeldung daher Schall mit Frequenzen zwischen 40 kHz und etwa 1 GHz verstanden.

Zur Erzeugung und zum Empfang solchen Ultraschalls werden zumindest im Bereich der Detektion und/ oder Untersuchung von Wertdokumenten piezoelektrische Ultraschallwandler verwendet, die elektrische Schwingungen unter Verwendung eines piezoelektrischen Elements in mechanische bzw. Schallschwingungen umwandeln. Um deren Schwingung bei der Erzeugung oder dem Empfang des Ultraschalls nicht zu beeinträchtigen, besitzen diese Anschlußlitzen, d. h. sehr flexible Anschlußdrähte, die nur mittelbar oder unmittelbar mit dem piezoelektrischen Element elektrisch leitend verbunden sind. Ultraschallwandler mit starren Anschlußstiften werden daher typischerweise nicht verwendet. Gebräuchliche piezoelektrische Elemente verfügen über eine Temperaturbeständigkeit bis etwa 80°C oder 90°C, so daß diese bei der Herstellung von Sensoren sehr schonend zu behandeln sind.

Die so beschriebenen Ultraschallsensoren sind jedoch nicht einfach herzustellen, da die Anschlußlitzen mit Leiterbahnen auf einer Leiterplatte zu kontaktieren sind, die meist noch weitere Schaltungselemente aufweist.

In US 2010/0005888 A1 ist ein Sensor zur Untersuchung eines Wertdokuments in einem Erfassungsbereich des Sensors beschrieben. Der Sensor umfasst wenigstens ein elektrisches Bauteil zur Wandlung elektrischer Energie in Schallwellen und/oder elektromagnetische Felder, insbesondere optische Strahlung, zur Untersuchung des Wertdokuments und/ oder zur Detektion von Schallwellen und/ oder magnetischer oder elektromagnetischer Felder, insbesondere optischer Strahlung, von dem Wertdokument unter Bildung von Detektionssignalen, und einen Halter für das Bauteil, der eine Ausnehmung oder ein Loch zur wenigstens teilweisen Aufnahme des Bauteils aufweist, in der das elektrische Bauteil gehalten ist, und auf oder in dem sich wenigstens eine Leiterbahn erstreckt, mit der wenigstens ein elektrischer Kontakt des elektrischen Bauteils kontaktiert ist.

Der Erfindung liegt daher die Aufgabe zugrunde, Mittel und Verfahren bereitzustellen, mittels derer Ultraschallsensoren zur Detektion und/ oder Untersuchung von Wertdokumenten einfach herstellbar sind, und einen entsprechenden Ultraschallsensor zu schaffen.

Die Aufgabe wird gelöst durch einen Ultraschallsensor zur Detektion und/ oder Untersuchung von Wertdokumenten mit den Merkmalen des Anspruchs 1. Der Ultraschallwandler verfügt neben dem Anschlußträger insbesondere über das Ultraschallwandlermodul für einen Ultraschallsensor zur Detektion und/ oder Untersuchung von Wertdokumenten, das wenigstens einen piezoelektrischen Ultraschallwandler mit elektrischen Anschlußlitzen und ein Montagemodul zum Halten des wenigstens einen Ultraschallwandlers und zur Montage auf einem Anschlußträger umfaßt, wobei das Montagemodul Leiterbahnen aufweist, die mit den Anschlußlitzen des wenigstens einen Ultraschallwandlers elektrisch verbunden sind und die Kontaktflächen aufweisen, die so ausgebildet sind, daß das Ultraschallwandlermodul zur Montage auf eine Oberfläche des Anschlußträgers, auf der sich zu den Kontaktflächen komplementäre Kontaktflächen befinden, setzbar ist und die Kontaktflächen und die komplementären Kontaktflächen jeweils miteinander verlötbar sind.

Der Ultraschallsensor zur Detektion und/ oder Untersuchung von Wertdokumenten umfasst das Ultraschallwandlermodul und den Anschlußträger mit zu den Kontaktflächen des Ultraschallwandlermoduls komplementären Kontaktflächen, bei dem die Kontaktflächen des Ultraschallwandlermoduls und die komplementären Kontaktflächen des Anschlußträgers miteinander verlötet sind.

Der Ultraschallsensor kann insbesondere zur Detektion von Wertdokumenten, insbesondere zu Detektion einer Kante eines an ihm vorbei- oder durch ihn hindurchtransportierten Wertdokuments und/oder zur Detektion von Doppelabzügen, und/ oder zur Untersuchung, d. h. insbesondere zur Erfassung von Ultraschalleigenschaften, von Wertdokumenten ausgebildet sein.

Das Ultraschallwandlermodul verfügt über das Montagemodul, das den wenigstens einen piezoelektrischen Ultraschallwandler hält, der wiederum elektrische Anschlüsse in Form von Anschlußlitzen bzw. leicht biegbaren Anschlußdrähten, nicht aber Anschlußstifte aufweist. Es ist dazu vorgesehen, auf oder an einem geeignet vorgegebenen Anschlußträger montiert zu werden, der sowohl als Träger für das Montagemodul als auch zu dessen elektrischem Anschluß dient. Damit dient es auch der Montage des Ultraschallwandlers.

Das Ultraschallwandlermodul zeichnet sich weiter dadurch aus, daß es Leiterbahnen aufweist, die mit den Anschlußlitzen des wenigstens einen Ultraschallwandlers elektrisch verbunden, vorzugsweise verlötet sind. Die Leiterbahnen können beispielsweise wie Leiterbahnen auf einer Leiterplatte oder auch wenigstens teilweise in Form von Drähten ausgebildet sein. Die Leiterbahnen verfügen über Kontaktflächen, die zur Ausbildung von Lötverbindungen zum elektrischen Anschluß dienen. Der Anschlußträger verfügt dazu ebenfalls über Leiterbahnen, die zu den Kontaktflächen des Ultraschallwandermoduls komplementäre Kontaktflächen aufweisen und auf einer Oberfläche bzw. einem Oberflächenbereich des Anschlußträgers angeordnet sind, auf den das Montagemodul zur Montage gesetzt wird. Die Kontaktflächen und die komplementären Kontaktflächen sind so aufeinander abgestimmt, daß das Ultraschallwandlermodul zur Montage auf die Oberfläche des Anschlußträgers setzbar ist und die Kontaktfläche und die komplementären Kontaktflächen miteinander verlötbar sind. Die Lage der Kontaktflächen und die der komplementären Kontaktflächen kann dadurch aufeinander abgestimmt sein, daß Ausbildung und Lage der Kontaktflächen auf dem Montagemodul oder Ausbildung und Lage der komplementären Kontaktflächen des Anschlußträgers vorgegeben werden und das jeweils andere Teil entsprechend ausgebildet wird.

Der Anschlußträger kann insbesondere neben für den elektrischen Anschluß des Montagemoduls vorgesehenen Kontaktflächen noch weitere elektrische oder elektronische Bauelemente, gegebenenfalls einschließlich eines Prozessors oder eines FPGA, aufweisen.

Damit der Anschlußträger als Träger für das Montagemodul dienen kann, sind die Formen des Anschlußträgers und des Montagemoduls so aufeinander abgestimmt, daß das Montagemodul auf dem Anschlußträger mechanisch befestigbar ist. Insbesondere kann wenigstens ein Bereich einer Oberfläche des Anschlußträgers entsprechend ausgebildet sein.

Zur Montage des Ultraschallwandlermoduls braucht dieses nur auf die Oberfläche bzw. den Oberflächenbereich des Anschlußträgers gesetzt zu werden, so daß ein Verlöten der Kontaktflächen mit den komplementären Kontaktflächen möglich ist. Da das Montagemodul und der Anschlußträger wenigstens im Bereich der Kontaktflächen bzw. komplementären Kontaktflächen verglichen mit den Anschlußlitzen starr sind, kann die Lötverbindung einfach hergestellt werden, auch wenn der Anschlußträger groß ist oder bereits andere Bauelemente aufweist. Dies erlaubt es, die Fertigung des Ultraschallmoduls abzuschließen und zu prüfen, insbesondere die kritische Kontaktierung zwischen den Anschlußlitzen und den Kontaktflächen zu prüfen, bevor das Ultraschallwandlermodul auf dem Anschlußträger befestigt wird. Dazu ist nur die Handhabung des Montagemoduls und des wenigstens einen Ultraschallwandlers notwendig.

Die Aufgabe wird daher auch gelöst durch ein Verfahren zum Herstellen eines Ultraschallsensors zur Detektion und/ oder Untersuchung von Wertdokumenten mit den Merkmalen des Anspruchs 10. Es umfasst die Schritte: Herstellen des Ultraschallwandlermoduls, Prüfen der Kontaktierung zwischen der Anschlußlitzen und den Kontaktflächen des Montagemoduls, Aufsetzen des Ultraschallwandlers auf einen Anschlußträger mit zu den Kontaktflächen des Ultraschallwandlermoduls komplementären Kontaktflächen, und Verlöten der Kontaktflächen und der komplementären Kontaktflächen.

Prinzipiell braucht das Ultraschallwandlermodul nur einen Ultraschallwandler aufzuweisen. Vorzugsweise weist das Ultraschallwandlermodul jedoch zusätzlich zu dem wenigstens einen Ultraschallwandler wenigstens einen weiteren piezoelektrischen Ultraschallwandler mit elektrischen Anschlußlitzen auf, das Montagemodul ist zum Halten der Ultraschallwandler ausgebildet ist und weist Leiterbahnen auf, die mit den Anschlußlitzen des weiteren Ultraschallwandlers elektrisch verbunden sind und weitere Kontaktflächen aufweisen, die so ausgebildet sind, daß das Ultraschallwandlermodul zur Montage auf die Oberfläche des Anschlußträgers, auf der sich zu den weiteren Kontaktflächen weitere komplementäre Kontaktflächen befinden, setzbar ist und die weiteren Kontaktflächen und die weiteren komplementären Kontaktflächen miteinander verlötbar sind. Ein solches Ultraschallwandlermodul erlaubt in einfacher Weise den Aufbau eines Ultraschallsensors auch mit mehreren Ultraschallwandlern.

Das Montagemodul ist zum einen zum Halten des oder der Ultraschallwandler und zum anderen zur Kontaktierung mit den Anschlußlitzen ausgebildet, kann ansonsten beliebig ausgebildet sein. So kann das Montagemodul einen Wandlerhalter, in dem der Ultraschallwandler gehalten ist bzw. die Ultraschallwandler gehalten sind, und eine mit dem Wandlerhalter mechanisch verbundene Leiterplatte mit den Leiterbahnen aufweisen. Diese Ausführungsform erlaubt es, den Wandlerhalter besonders einfach herzustellen, da er im wesentlichen nur mechanischen Funktionen zu erfüllen braucht. Die Verwendung der Leiterplatte erlaubt eine einfache Ausbildung der Leiterbahnen mit Standardverfahren. Die Verbindung zwischen dem Wandlerhalter und der Leiterplatte kann beliebig, beispielsweise durch Form- und/ oder Kraftschluß oder durch Stoffschluß, d.h. Kleben, hergestellt sein.

Obwohl die Leiterplatte prinzipiell beliebig ausgebildet sein kann, kann sie vorzugsweise über wenigstens eine Durchgangsbohrung, durch die die Anschlußlitzen des Ultraschallwandlers geführt sind, bzw. Durchgangsbohrungen, durch die die Anschlußlitzen der Ultraschallwandler geführt sind, verfügen. Dies erlaubt eine einfache Herstellung von Lötverbindungen zwischen den Anschlußlitzen und den Leiterbahnen.

Alternativ kann das Montagemodul ein einstückiges Halteelement aufweisen, in dem und/ oder auf dessen Oberfläche die Leiterbahnen verlaufen. Das Halteelement erfüllt damit die Funktionen sowohl der Leiterplatte als auch des Wandlerhalters. Diese Ausführungsform erlaubt es, die Herstellung des Ultraschallwandlermoduls, insbesondere bei großen Stückzahlen, zu vereinfachen, da der Arbeitsschritt der Verbindung der Leiterplatte mit dem Wandlerhalter entfällt. Insbesondere kann das Halteelement durch Spritzguß hergestellt sein.

Das Montagemodul dient insbesondere zum Halten des oder der Ultraschallwandler und kann dazu entsprechende Einrichtungen, beispielsweise eine oder mehrere Ausnehmungen oder Durchgangslöcher aufweisen, in der bzw. denen der oder die Ultraschallwandler gehalten sind. Es dient daher auch der Ausrichtung der Ultraschallwandler nicht nur relativ zum Montagemodul, sondern nach Montage des Ultraschallwandlermoduls auch relativ zu dem Anschlußträger. Da insbesondere die Ausrichtung der Ultraschallwandler relativ zu dem Montagemodul vor der Montage auf dem Anschlußträger geprüft werden kann, ist eine einfache Ausrichtung auch relativ zu dem Anschlußträger zu erreichen.

Umfaßt das Ultraschallwandlermodul wenigstens zwei in dem Montagemodul gehaltene Ultraschallwandler, können die Ultraschallwandler jeweils eine Sende- oder Empfangscharakteristik für Ultraschall aufweisen. Die Ultraschallwandler können dabei gemäß einer ersten Variante durch entsprechende Ausbildung des Montagemoduls so darin gehalten sein, daß die Sende- bzw. Empfangscharakteristiken in einem vorgegebenen Winkel gegeneinander geneigt sind. Bei einer zweiten Variante können die Sende- bzw. Empfangscharakteristiken der Ultraschallwandler parallel zueinander ausgerichtet sein. Hierzu kann das Montagemodul entsprechend ausgebildet sein. Diese Ausführungsform erleichtert insbesondere die Herstellung von Ultraschallsensoren mit wenigstens zwei, vorzugsweise mehreren Ultraschallwandlern, die mit ihren Sende- bzw. Empfangscharakteristiken zueinander in vorgegebener Weise ausgerichtet sein sollen.

Zur Halterung des oder der Ultraschallwandler ist bevorzugt, daß der oder die Ultraschallwandler von dem Wandlerhalter wenigstens teilweise für Schwingungen, insbesondere im Ultraschallfrequenzbereich, entkoppelt gehalten sind. Unter "entkoppelt" wird dabei verstanden, daß Schwingungen von dem Ultraschallwandler zu dem Montagemodul nicht oder nicht in voller Stärke übertragen werden. Hierzu kann der Ultraschallwandler bzw. können die Ultraschallwandler so in dem Montagemodul gehalten sein, daß eine Dämpfung bei einer Übertragung von Schwingungen zwischen Ultraschallwandler und Montagemodul und/ oder ein Impedanzsprung auftritt.

Prinzipiell kann es genügen, daß das Montagemodul nur auf den Anschlußträger gesetzt und mit den komplementären Kontaktflächen auf diesem verlötet wird. Zur Erhöhung der Genauigkeit der Ausrichtung des Ultraschallwandlermoduls auf dem Anschlußträger und einer erhöhten Stabilität nach der Montage ist es jedoch bevorzugt, daß das Montagemodul wenigstens ein Positionierelement aufweist, mittels dessen und eines komplementären Positionierelements auf oder in dem Anschlußträger das Montagemodul auf dem Anschlußträger positionierbar ist. Beispielsweise kann als Positionierelement an dem Montagemodul ein Vorsprung, insbesondere ein Stift, vorgesehen sein; der Anschlußträger kann dann als komplementäres Positionierelement eine entsprechende Vertiefung, beispielsweise eine Ausnehmung oder ein Loch, bei einem Stift als Positionierelement eine Bohrung, aufweisen. Es ist auch möglich, daß die Ausbildung des Positionierelements und die des komplementären Positionierelements vertauscht sind. Das Positionierelement und das komplementäre Positionierelement müssen relativ zu den Kontaktflächen und den komplementären Kontaktflächen geeignet angeordnet sein.

Auch kann vorzugsweise das Montagemodul ein Schnapp- oder Rastelement aufweisen oder das Positionierelement als Schnapp- oder Rastelement ausgebildet sein, mittels dessen das Montagemodul auf dem Anschlußträger befestigbar ist. Diese Ausführungsform bietet gleichzeitig die Vorteile, daß durch Herstellen der Schnapp- oder Rastverbindung eine einfache mechanische Montage des Montagemoduls auf dem Anschlußträger noch vor einem Verlöten der Kontaktflächen möglich ist und darüber hinaus eine stabile mechanische Verbindung hergestellt wird, die die Lötverbindung entlastet.

Die Erfindung wird im Folgenden noch weiter beispielhaft an Hand der Zeichnungen erläutert. Es zeigen:
- Fig. 1: eine schematische Ansicht einer Wertdokumentbearbeitungsvorrichtung, im Beispiel einer Banknotensortiervorrichtung,
- Fig. 2: eine schematische Ansicht eines Abschnitts der Banknotenbearbeitungsvorrichtung in Fig. 1 mit einer Transportvorrichtung für Banknoten und einem Ultraschallsensor mit zwei Ultraschallwandlermodulen,
- Fig. 3: eine perspektivische Ansicht eines der Ultraschallwandlermodule in Fig. 2,
- Fig. 4: eine teilweise geschnittene Ansicht des Ultraschallwandlermoduls in Fig. 3 montiert auf einem nur teilweise gezeigten Anschlußträger,
- Fig. 5: eine Ansicht der dem Anschlußträger in Fig. 4 zugewandten Seite des Ultraschallwandlermoduls in Fig. 3,
- Fig. 6: eine perspektivische Ansicht eines zweiten Ultraschallwandlermoduls, das eine Variante des Ultraschallwandlermoduls in Fig. 4 ist,
- Fig. 7: eine Seitenansicht des auf dem Anschlußträger montierten Ultraschallwandlermoduls in Fig. 6,
- Fig. 8: eine teilweise geschnittene schematische Ansicht eines dritten Ultraschallwandlermoduls,
- Fig. 9: eine Ansicht der einem Anschlußträger zugewandten Seite des Ultraschallwandlermoduls in Fig. 8,
- Fig. 10: eine teilweise geschnittene schematische Ansicht eines vierten Ultraschallwandlermoduls,
- Fig. 11: eine teilweise geschnittene schematische Ansicht eines fünften Ultraschallwandlermoduls, und
- Fig. 12: eine Ansicht der einem Anschlußträger zugewandten Seite des Ultraschallwandlermoduls in Fig. 11.

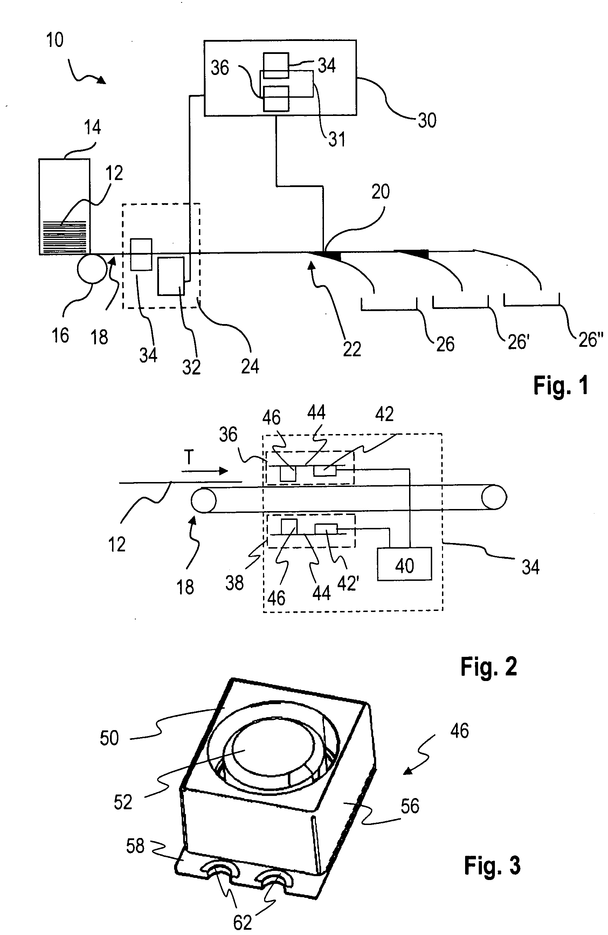

Fig. 1 zeigt eine Vorrichtung 10 zur Bearbeitung von Wertdokumenten, im Beispiel eine Banknotenbearbeitungsvorrichtung, die unter anderem zur Ermittlung des Zustands und der Echtheit von Wertdokumenten 12 in Form von Banknoten dient. Die Vorrichtung 10 verfügt über ein Eingabefach 14 für die Eingabe von zu bearbeitenden Wertdokumenten 12, einen Vereinzler 16, der auf Wertdokumente 12 in dem Eingabefach 14 zugreifen kann, eine Transporteinrichtung 18 mit entlang eines Transportpfades 22 nacheinander angeordneten Weichen 20 und 20', und nach jeder der Weichen bzw. an einem den beiden Weichen folgenden Ende des Transportpfades 22 jeweils ein Ausgabefach 26 bzw. 26' bzw. 26". Entlang des durch die Transporteinrichtung 18 gegebenen Transportpfades 22 ist vor der Weiche 20 und nach dem Vereinzler 16 eine Sensoranordnung 24 angeordnet, die zur Erfassung von Eigenschaften vereinzelt zugeführter Wertdokumente 12 und Bildung von die Eigenschaften wiedergebenden Sensorsignalen dient. Eine Steuereinrichtung 30 ist wenigstens mit der Sensoranordnung 24 und den Weichen 20 und 20' über Signalverbindungen verbunden und dient zur Auswertung von Sensorsignalen der Sensoranordnung 24 und Ansteuerung wenigstens der Weichen 20 und 20' in Abhängigkeit von dem Ergebnis der Auswertung der Sensorsignale.

Die Sensoranordnung 24 umfaßt dazu in diesem Ausführungsbeispiel einen optischen Sensor 32 zur ortsaufgelösten Erfassung farblicher Eigenschaften, der von dem Wertdokument remittierte optische Strahlung erfaßt. Die Anordnung umfaßt weiter einen Ultraschallsensor 34 zur Detektion von an ihm in Transportrichtung T vorbeitransportieren Wertdokumenten. Im Beispiel ist er genauer zur Erkennung von Doppelabzügen ausgebildet, d.h. von fehlerhaft bzw. unvollständig vereinzelten und sich daher überlappenden Wertdokumenten.

Der Ultraschallsensor 34 ist genauer, aber schematisch in Fig. 2 gezeigt. Er ist als Transmissionssensor ausgebildet und umfaßt dazu einen Senderabschnitt 36 und einen Empfängerabschnitt 38, die auf sich gegenüberliegenden Seiten des Transportpfades 22 angeordnet sind, sowie eine mit den Abschnitten über Signalverbindungen verbundene Steuer- und Auswerteeinrichtung 40 zur Ansteuerung des Senderabschnitts 36 und zur Verarbeitung von Signalen des Empfängerabschnitts 38. Die Abschnitte 36 und 38 sind, bis auf elektronische Schaltungen 42 und 42', gleich ausgebildet, so daß es genügt, nur einen der Abschnitte genauer zu beschreiben.

Der Abschnitt 36 verfügt über einen Anschlußträger 44 in Form einer Leiterplatte, auf der ein Ultraschallwandlermodul 46 angebracht und gehalten ist. Auf dem Anschlußträger 44 befinden sich Leiterbahnen 48, die die elektrische Schaltung 42, eine Treiberschaltung zu Ansteuerung des Ultraschallwandlermoduls 46, und elektrische Anschlüsse des Ultraschallwandlermoduls 46, elektrisch verbinden. Bei dem Empfängerabschnitt 38 ist die elektrische Schaltung 42' eine Signalverarbeitungsschaltung, die einen Prozessor oder ein FPGA umfassen kann und Signale von dem Ultraschallwandlermodul des Empfängerabschnitts verarbeitet und an die Steuer- und Auswerteeinrichtung 40 überträgt.

Das Ultraschallwandermodul 46 ist genauer in den Figuren 3 bis 5 gezeigt. Es verfügt über ein Montagemodul 50 und, in diesem Ausführungsbeispiel, einen Ultraschallwandler 52, der in dem Montagemodul gehalten ist.

Der Ultraschallwandler 52 ist ein piezoelektrischer Ultraschallwandler, der über Anschlußlitzen 54 verfügt, über die elektrische Signale zugeführt werden, die der Ultraschallwandler in Ultraschall mit einer vorgegebenen Frequenz oder in einem vorgegebenen Frequenzbereich, jeweils zwischen 40 kHz und 1 MHz, vorzugsweise zwischen 100 kHz und 500 kHz, wandeln. Bei der Verwendung im Empfängerabschnitt führen die Anschlußlitzen 54 die durch Wandlung des empfangenen Ultraschalls in elektrische Spannungen entstehenden Spannungen bzw. Ströme.

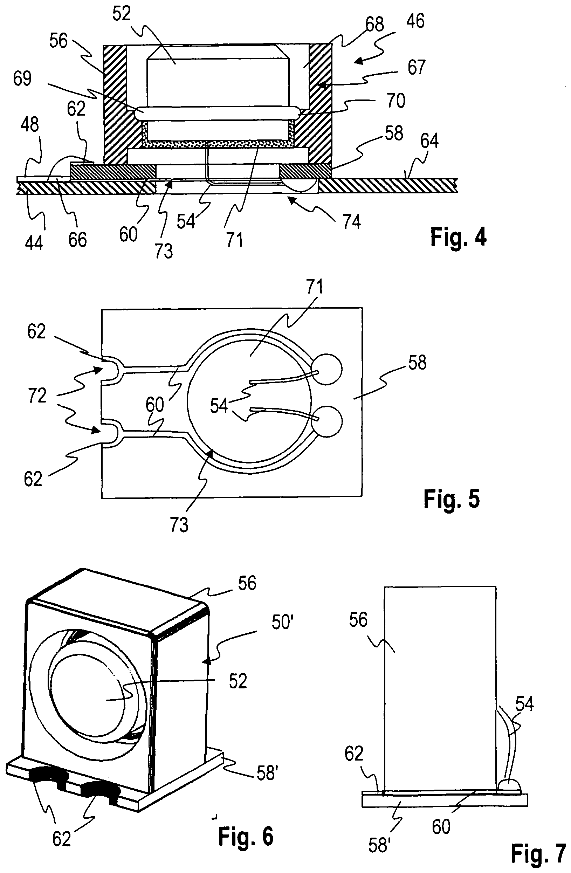

Das Montagemodul 50 umfaßt im vorliegenden Ausführungsbeispiel einen Wandlerhalter 56, in dem der Ultraschallwandler 52 gehalten ist, und eine mit dem Wandlerhalter 56 verbundene Leiterplatte 58 mit Leiterbahnen 60. In Fig. 4 sind der Wandlerhalter 56 und die Leiterplatte 58 geschnitten gezeigt, während der Ultraschallwandler 52 in einer Seitenansicht gezeigt ist. Das Montagemodul 50 ist insgesamt so ausgebildet, daß dessen Leiterbahnen 60 mit den Anschlußlitzen 54 des wenigstens einen Ultraschallwandlers 52 elektrisch verbunden sind, und daß die Leiterbahnen 60 Kontaktflächen 62 aufweisen, die so ausgebildet sind, daß das Ultraschallwandlermodul 46 zur Montage auf eine Oberfläche 64 des Anschlußträgers 44, auf dem sich zu den Kontaktflächen 62 komplementäre Kontaktflächen 66 befinden, setzbar ist und die Kontaktflächen 62 und die komplementären Kontaktflächen 66 miteinander verlötbar sind.

Der Wandlerhalter 56 verfügt dazu als Aufnahme 67 für den Ultraschallwandler über ein Durchgangsloch 68 mit kreisförmigem Querschnitt, das in seiner Wand eine umlaufende Schulter bzw. Nut 70 aufweist. In dem Durchgangsloch 68 ist der Ultraschallwandler 52, der eine der Schulter bzw. Nut entsprechende Nut aufweist, mittels eines elastischen O-Rings 69 für Ultraschallschwingungen wenigstens teilweise von dem Wandlerhalter entkoppelt gehalten. Auf der Seite des Ultraschallwandlers 52, auf der Anschlußlitzen 54 aus diesem austreten, ist das Durchgangsloch 68 mit einer eingespritzten elastischen Masse 71 gefüllt, so daß der Ultraschallwandler 52 sicher und relativ zu dem Wandlerhalter 56 ausgerichtet in diesem gehalten ist.

Der Wandlerhalter 56 kann als Formteil durch Spritzguß oder durch Bearbeitung eines geeigneten Materialblocks hergestellt sein.

Die Leiterplatte 58 besitzt die Leiterbahnen 60, die in diesem Ausführungsbeispiel etwa spiegelsymmetrisch ausgebildet sind. An dem einen Ende sind sie durch eine Lötverbindung mit den Anschlußlitzen 54 elektrisch verbunden; an dem anderen Ende enden sie in den schon erwähnten Kontaktflächen 62. In diesem Ausführungsbeispiel weist die Leiterplatte 58 für jede der Leiterbahnen 60 eine Ausbuchtung 72 auf. Die Kontaktflächen 60 erstrecken sich von der Unterseite der Leiterplatte 58, die nicht in Kontakt mit dem Wandlerhalter 56 ist, über den Rand der Leiterplatte 58 bis auf die Oberseite der Leiterplatte 58, die über den Wandlerhalter 56 herausreichende Bereiche aufweist. Die Leiterbahnen sind in den Figuren nur schematisch, nicht aber maßstäblich gezeigt. Die Leiterplatte 58 verfügt weiter über eine Öffnung 73, durch die die Anschlußlitzen 54 in den Bereich der Leiterbahnen 60 geführt werden können.

Der Wandlerhalter 56 und die Leiterplatte 58 sind in diesem Ausführungsbeispiel durch eine nicht gezeigte Klebeverbindung miteinander zu dem Montagemodul 50 verbunden.

Der Anschlußträger 44 weist in diesem Ausführungsbeispiel neben den zu den Kontaktflächen 60 komplementären Kontaktflächen 66 einen optionalen Durchbruch 74 auf, der relativ zu den komplementären Kontaktflächen 66 und den Enden der Leiterbahnen 60 bei montiertem Montagemodul so angeordnet ist, daß die Enden der Anschlußlitzen 54 und deren Lötverbindungen mit den Leiterbahnen 60 innerhalb des Durchbruchs 74 angeordnet sind und nicht an der Unterseite hervorstehen (vgl. Fig. 4).

Zur Herstellung des Ultraschallwandlermoduls wird zunächst der Ultraschallwandler 52 in dem Wandlerhalter 56 befestigt. Danach wird der Wandlerhalter 56 mit dem Ultraschallwandler 52 mechanisch verbunden. Dann werden die Anschlußlitzen 54 mit den Leiterbahnen 60 verlötet.

Das Montagemodul kann nun einfach überprüft werden, beispielsweise im Hinblick darauf, ob zwischen den Kontaktflächen 62 und den Anschlußlitzen 54 bzw. dem Ultraschallwandler 52 eine hinreichende elektrische Verbindung besteht.

Nach der Prüfung kann das Montagemodul 50 zur Montage mit der dem Ultraschallwandler 52 abgewandten Seite, d. h. in Fig. 3 der Unterseite der Leiterplatte 58 und in diesem Ausführungsbeispiel der die Leiterbahnen 60 tragenden Seite, auf den Anschlußträger 44 gesetzt werden, so daß die Kontaktflächen 62 und die komplementären Kontaktflächen 66 benachbart sind. Es kann dann eine Lötverbindung zwischen diesen Flächen hergestellt werden, die in diesem Ausführungsbeispiel auch der mechanischen Befestigung des Montagemoduls 40 auf dem Anschlußträger 44 dient. Damit ist der Ultraschallwandler 52 relativ zu dem Anschlußträger 44 ausgerichtet, so daß eine aufwendige Nachjustierung entfallen kann.

Grundsätzlich kann die Sende- bzw. Empfangsrichtung des Ultraschallwandlers 52 in anderen Ausführungsbeispielen auch mit dem Anschlußträger 44 einen anderen Winkel bilden, was durch Änderung der Montage des Montagemoduls oder durch Änderung des Durchgangslochs erreicht werden kann.

Eine Variante des vorhergehenden Ausführungsbeispiels ist in den Figuren 6 und 7 gezeigt. Hier unterscheidet sich das Montagemodul 50' von dem Montagemodul 50 nur dadurch, daß es mit einer Seite so auf den Anschlußträger montiert werden kann, daß die Sende- bzw. Empfangsrichtung des Ultraschallwandlers 52 in einer Richtung parallel zu dem Anschlußträger 44 verläuft. In diesen Figuren bezeichnen gleiche Bezugszeichen gleiche Komponenten wie im ersten Ausführungsbeispiel. Dazu ist im Unterschied zu dem ersten Ausführungsbeispiel die Leiterplatte 58' kürzer ausgebildet und die Leiterbahne verlaufen auf der dem Ultraschallwandler zugewandten Seite der Leiterplatte. Der unveränderte Wandlerhalter 56 mit dem Ultraschallwandler 52 ist aber nun mit einer Schmalseite mit der Leiterplatte 58' durch eine Klebeverbindung verbunden. Zur mechanischen Montage des Ultraschallwandlermoduls kann hier zusätzlich zu der Lötverbindung eine Klebverbindung eingesetzt werden. Aufgrund der anderen Ausrichtung des Ultraschallwandlermoduls relativ zu dem Anschlußträger braucht dieser keinen Durchbruch aufzuweisen.

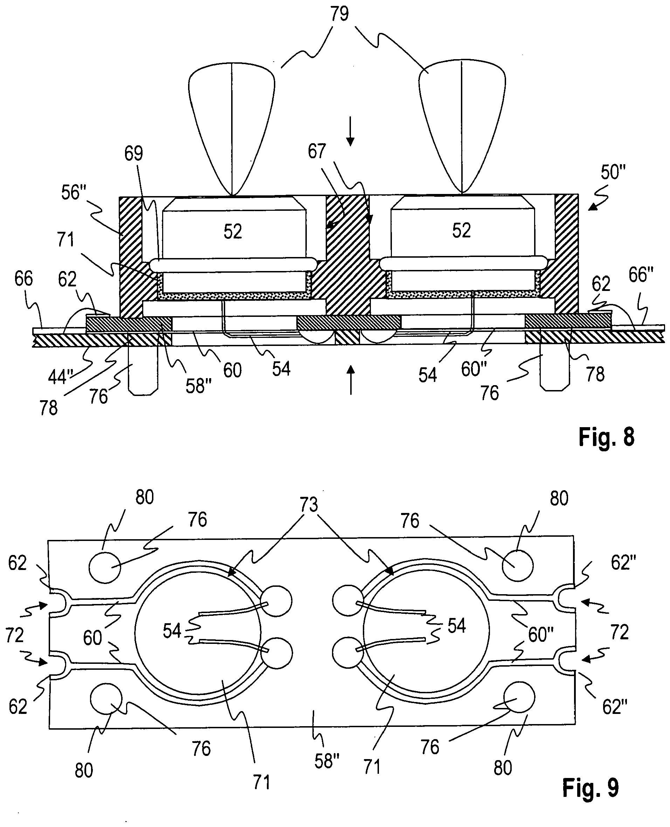

Ein drittes Ausführungsbeispiel in den Fig. 8 und 9 unterscheidet sich von dem ersten Ausführungsbeispiel im wesentlichen dadurch, daß das Ultraschallwandlermodul nun statt nur eines Ultraschallwandlers 52 zwei Ultraschallwandler besitzt, die in diesem Ausführungsbeispiel gleich ausgebildet und gleich ausgerichtet gehalten sind. Da sie gleich ausgebildet sind, werden für sie und ihre Teile die gleichen Bezugszeichen wie im ersten Ausführungsbeispiel verwendet und die Erläuterungen zu dem Ultraschallwandler des ersten Ausführungsbeispiels gelten auch hier entsprechend.

Das Montagemodul 50" besitzt wie im ersten Ausführungsbeispiel einen Wandlerhalter 56" und eine Leiterplatte 58". Sowohl der Wandlerhalter als auch die Leiterplatte 58' sind bezüglich der in Fig. 8 durch Pfeile angedeuteten, orthogonal zu der Zeichenebene verlaufenden Ebene spiegelsymmetrisch ausgebildet.

Der Wandlerhalter 56" verfügt über zwei Aufnahmen 67 für die Ultraschallwandler 52, die wie im ersten Ausführungsbeispiel gestaltet sind. Die Befestigung der Ultraschallwandler 52 in den Aufnahmen 67 erfolgt wie im ersten Ausführungsbeispiel, so daß in den Figuren 8 und 9 für gleiche Komponenten die gleichen Bezugszeichen verwendet werden wie im ersten Ausführungsbeispiel und die Ausführungen zu diesen entsprechend gelten.

Die Aufnahmen 67 in dem Wandlerhalter 56" sind so ausgebildet, daß die Ultraschallwandler 52 parallel ausgerichtet sind. Ihre Sende- bzw. Empfangscharakteristiken 79, die in Fig. 8 nur grob schematisch angedeutet sind, sind daher auch parallel zueinander ausgerichtet, so daß ein Ultraschallsensor mit zwei Spuren aufgebaut werden kann. Die Charakteristiken sind jeweils um eine Achse parallel zu Hauptsende- bzw. Empfangsrichtung rotationssymetrisch, so daß die Achsen und damit die Hauptsende- bzw. Empfangsrichtungen parallel sind.

Der Wandlerhalter 56" unterscheidet sich von dem Wandlerhalter 56 darüber hinaus durch Positionierelemente 76, mittels derer und komplementärer Positionierelemente in dem Anschlußträger 44" das Montagemodul 50" auf dem Anschlußträger positionierbar ist. Als Positionierelemente 76 dienen hier Stifte, als komplementäre Positionierelemente 78 in dem Anschlußträger 44' entsprechende Löcher. Die komplementären Positionierelemente 78 sind in Fig. 8 durch durchgezogene Linien angedeutet.

Die Leiterplatte 58" unterscheidet sich weiter von der Leiterplatte 58 durch Durchgangslöcher 80, die so angeordnet sind, daß bei der Verbindung der Leiterplatte 58" mit dem Wandlerhalter 56" dessen Positionierelemente durch die Durchgangslöcher greifen. Die Durchmesser der Löcher 78 und der Durchgangslöcher 80 sind relativ zu dem Durchmesser der Stifte 76 so bemessen, daß neben einem Formschluss auch ein gewisser Kraftschluß erzielt wird, so daß ein Verkleben optional ist. Diese Positionierelemente dienen damit nicht nur der Positionierung, sondern können auch parallel zum Anschlußträger auftretende Kräfte aufnehmen, so daß die Lötverbindungen entlastet werden.

Das Montagemodul 50" ist daher zum Halten beider Ultraschallwandler ausgebildet und weist insbesondere Leiterbahnen 60" auf, die mit den Anschlußlitzen 54 des zweiten Ultraschallwandlers elektrisch verbunden sind und zweite Kontaktflächen aufweisen, die so ausgebildet sind, daß das Ultraschallwandlermodul zur Montage auf die Oberfläche des Anschlußträgers 44", auf der sich zu den zweiten Kontaktflächen 62" zweite komplementäre Kontaktflächen 66" befinden, setzbar ist und die weiteren Kontaktflächen 62" und die komplementären weiteren Kontaktflächen 66" miteinander verlötbar sind. Gleiches gilt für die Kontaktflächen 62 und die komplementären Kontaktflächen 66.

Die Herstellung des Ultraschallwandlermoduls erfolgt analog zum ersten Ausführungsbeispiel.

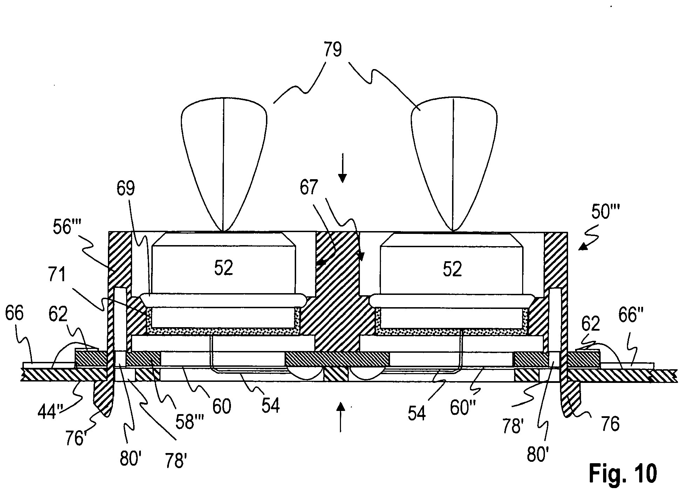

Ein viertes Ausführungsbeispiel in Fig. 10 unterscheidet sich von dem dritten Ausführungsbeispiel nur durch die Art der Positionierelemente und der komplementären Positionierelemente. Der Wandlerhalter 56‴ und die Leiterplatte 58'", die Teile des Montagemoduls 50‴ sind, und die Ultraschallwandler 52 sind ansonsten wie im dritten Ausführungsbeispiel ausgebildet, so daß für sich entsprechende Komponenten die gleichen Bezugszeichen verwendet werden und die Erläuterungen zu den Komponenten des dritten Ausführungsbeispiels auch hier gelten.

Der Wandlerhalter 52‴ verfügt nun statt der Stifte als Positionierelemente über Schnapp- bzw. Rasthaken 76', der Anschlußträger als komplementäre Positionierelemente 78' über entsprechend angeordnete und dimensionierte Löcher. Die Leiterplatte 58‴ weist wiederum Durchgangslöcher 80' auf, die jedoch so dimensioniert sind, daß eine Funktion der Positionierelemente, insbesondere die Schnappbewegung ermöglicht wird.

Das Montagemodul 50‴ kann nun nach Herstellung und Prüfung auf den Anschlußträger 44‴ gesetzt werden, wobei die Positionierelemente 76' unter Auslenkung in die entsprechenden komplementären Positionierelemente 78' eingeführt werden, und bei Erreichen der Montagelage zurückschnappen. Diese Positionierelemente dienen damit nicht nur der Positionierung, sondern können auch parallel und orthogonal zum Anschlußträger auftretende Kräfte aufnehmen, so daß die Lötverbindungen entlastet werden.

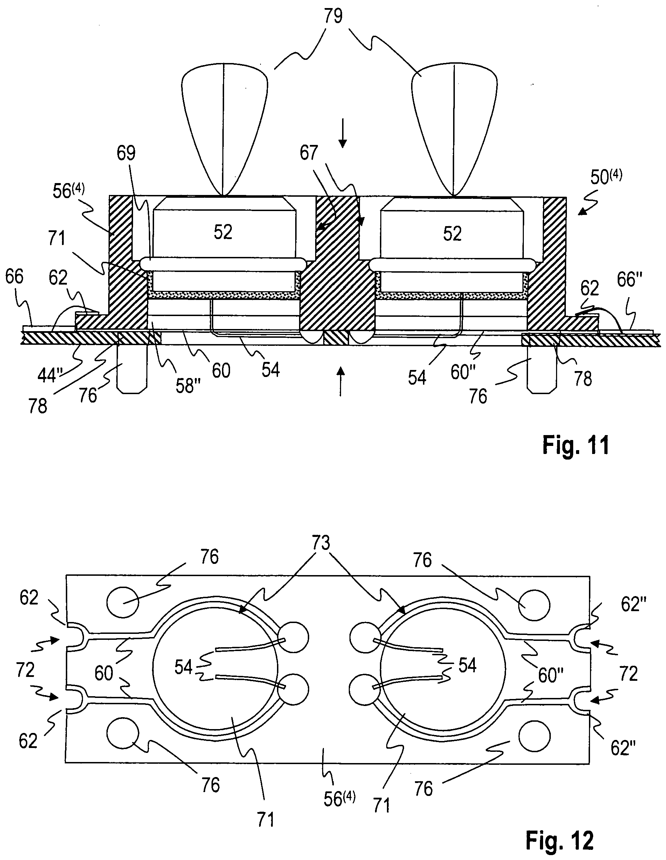

Ein fünftes Ausführungsbeispiel in Fig. 11 und 12 unterscheidet sich von dem dritten Ausführungsbeispiel dadurch, daß nun statt des Montagemoduls 50", das Wandlerhalter 52" und Leiterplatte 58" umfaßt, das Montagemodul 50⁽⁴⁾ ein einstückiges Halteelement 56⁽⁴⁾ aufweist, auf dessen Oberfläche die Leiterbahnen 60⁽⁴⁾ verlaufen. Für gleiche bzw. analoge Komponenten wie im zweiten Ausführungsbeispiel werden daher gleiche Bezugszeichen verwendet und die Erläuterungen zu diesen gelten entsprechend auch hier.

Das Halteelement 56⁽⁴⁾ ist so ausgebildet, daß es Wandlerhalter 52' und Leiterplatte 58' ersetzt. Es hat bis auf den Durchmesser der den Durchgangslöcher 80 entsprechenden Bereiche dieselbe Form wie das aus dem Wandlerhalter 52' und der Leiterplatte 58' gebildet Montagemodul.

Das Halteelement 56⁽⁴⁾ kann vorzugsweise als Spritzgußbauteil hergestellt sein. Die Leiterbahnen können entweder beim Spritzguß eingebracht oder nach Herstellung des Halteelements 56⁽⁴⁾, auch mit anderen Herstellverfahren, auf dieses aufgebracht werden. Diese Ausführungsform erlaubt eine besonders einfache Herstellung des Ultraschallwandlermoduls.

In anderen Varianten des letzten Ausführungsbeispiels können die Leiterbahnen 60 wenigstens teilweise durch Drähte realisiert sein und innerhalb des Halter 56⁽⁴⁾ verlaufen. Sie können bei Herstellung des Halters durch Spritzguß bereits beim Spritzguß in den Halter eingebracht werden.

## Patentansprüche

1. Ultraschallsensor zur Detektion und/ oder Untersuchung von Wertdokumenten (12) mit einem Ultraschallwandlermodul (46; 46'; 46"; 46‴; 46⁽⁴⁾) und einem Anschlußträger (44; 44', 44"),
wobei das Ultraschallwandlermodul (46; 46'; 46"; 46‴; 46⁽⁴⁾) wenigstens einen piezoelektrischen Ultraschallwandler (52) mit elektrischen Anschlußlitzen (54) und ein Montagemodul (50; 50'; 50"; 50‴; 50 ⁽⁴⁾) zum Halten des wenigstens einen Ultraschallwandlers (52) zur Montage auf dem Anschlußträger (44; 44"; 44‴) umfaßt, wobei das Montagemodul (50; 50'; 50"; 50‴; 50 ⁽⁴⁾) Leiterbahnen (60; 60"; 60⁽⁴⁾) aufweist, die mit den Anschlußlitzen (54) des wenigstens einen Ultraschallwandlers (52) elektrisch verbunden sind und die Kontaktflächen (62; 62") aufweisen,
wobei der Anschlussträger (44; 44', 44") zu den Kontaktflächen (62; 62") komplementäre Kontaktflächen (66, 66") aufweist,
wobei die Kontaktflächen (62;62") so ausgebildet sind, daß das Ultraschallwandlermodul (46) zur Montage auf eine Oberfläche (64) des Anschlußträgers (44), auf der sich die zu den Kontaktflächen (62; 62") komplementäre Kontaktflächen (66, 66") befinden, setzbar ist und die Kontaktflächen (62;62") und die komplementären Kontaktflächen (66, 66") miteinander verlötbar sind
wobei die Kontaktflächen (62, 62") des Ultraschallwandlermoduls (46; 46'; 46"; 46‴; 46⁽⁴⁾) und die komplementären Kontaktflächen (66; 66") des Anschlußträgers (44; 44'; 44") miteinander verlötet sind.

2. Ultraschallsensor nach Anspruch 1, bei dem das Ultraschallwandlermodul (46; 46'; 46"; 46‴; 46⁽⁴⁾) zusätzlich zu dem wenigstens einen Ulraschallwandler (52) einen weiteren piezoelektrischen Ultraschallwandler (52) mit elektrischen Anschlußlitzen (54) aufweist und das Montagemodul (50; 50"; 50⁽⁴⁾) zum Halten der Ultraschallwandler ausgebildet ist und Leiterbahnen (60; 60⁽⁴⁾) aufweist, die mit den Anschlußlitzen (54) des weiteren Ultraschallwandlers (52) elektrisch verbunden sind und weitere Kontaktflächen (62) aufweisen, die so ausgebildet sind, daß das Ultraschallwandlermodul (46) zur Montage auf die Oberfläche des Anschlußträgers, auf der sich zu den weiteren Kontaktflächen (62; 62") weitere komplementäre Kontaktflächen (66; 66") befinden, setzbar ist und die weiteren Kontaktflächen (62; 62") und die weiteren komplementären Kontaktflächen (66; 66") miteinander verlötbar sind.

3. Ultraschallsensor nach Anspruch 1 oder 2, bei dem das Montagemodul (50; 50'; 50"; 50‴) des Ultraschallwandlermoduls (46; 46'; 46"; 46‴; 46⁽⁴⁾) einen Wandlerhalter (56; 56"), in dem der Ultraschallwandler (52) gehalten ist bzw. die Ultraschallwandler (52) gehalten sind, und eine mit dem Wandlerhalter (56) verbundene Leiterplatte (58; 58'; 58"; 58‴) mit den Leiterbahnen (60) aufweist.

4. Ultraschallsensor nach Anspruch 3, bei dem die Leiterplatte (58; 58'; 58"; 58‴) des Ultraschallwandlermoduls (46; 46'; 46"; 46‴; 46⁽⁴⁾) wenigstens eine Durchgangsbohrung (68) aufweist, durch die die Anschlußlitzen (54) des Ultraschallwandlers (52) geführt sind bzw. Durchgangsbohrungen (68) aufweist, durch die die Anschlußlitzen (54) der Ultraschallwandler (52) geführt sind.

5. Ultraschallsensor nach Anspruch 1 oder Anspruch 2, bei dem das Montagemodul (50 ⁽⁴⁾) des Ultraschallwandlermoduls (46; 46'; 46"; 46‴; 46⁽⁴⁾) ein einstückiges Halteelement (56 ⁽⁴⁾)aufweist, in dem und/oder auf dessen Oberfläche die Leiterbahnen (60⁽⁴⁾) verlaufen.

6. Ultraschallsensor nach Anspruch 2 oder einem der Ansprüche 3 bis 5 und Anspruch 2, bei dem die Ultraschallwandler (52) des Ultraschallwandlermoduls (46; 46'; 46"; 46‴; 46⁽⁴⁾) jeweils eine Sende- oder Empfangscharakteristik für Ultraschall aufweisen und die Sende- bzw. Empfangscharakteristiken der Ultraschallwandler (52) parallel zueinander ausgerichtet sind.

7. Ultraschallsensor nach einem der vorhergehenden Ansprüche, bei dem das Montagemodul (50"; 50‴) des Ultraschallwandlermoduls (46; 46'; 46"; 46‴; 46⁽⁴⁾) wenigstens ein Positionierelement (76; 76') aufweist, mittels dessen und eines komplementären Positionierelements (78; 78') auf oder in dem Anschlußträger (44") das Montagemodul (50") auf dem Anschlußträger (44") positionierbar ist.

8. Ultraschallsensor nach einem der vorhergehenden Ansprüche, bei dem das Montagemodul (50‴) des Ultraschallwandlermoduls (46; 46'; 46"; 46‴; 46⁽⁴⁾) ein Schnapp- oder Rastelement (76') aufweist oder bei dem das Positionierelement (76') als Schnapp- oder Rastelement ausgebildet ist, mittels dessen das Montagemodul (50‴) auf dem Anschlußträger (44‴) befestigbar ist.

9. Ultraschallsensor nach Anspruch 3 oder Anspruch 4,
wobei bei dem Ultraschallwandlermodul (46; 46'; 46"; 46‴; 46⁽⁴⁾) der oder die Ultraschallwandler (52) von dem Wandlerhalter (56, 56'; 56"; 56‴; 56⁽⁴⁾) wenigstens teilweise für Schwingungen, insbesondere im Ultraschallfrequenzbereich, entkoppelt gehalten sind.

10. Verfahren zum Herstellen eines Ultraschallsensors zur Detektion und/ oder Untersuchung von Wertdokumenten (12) nach einem der vorhergehenden Ansprüche mit den Schritten:
Herstellen des Ultraschallwandlermoduls (46; 46';46", 46‴; 46⁽⁴⁾), Prüfen der Kontaktierung zwischen den Anschlußlitzen (54) und den Kontaktflächen (62; 62") des Montagemoduls (50; 50'; 50", 50‴, 50⁽⁴⁾, Aufsetzen des Ultraschallwandlermoduls (46; 46';46", 46‴; 46⁽⁴⁾) auf den Anschlußträger (44; 44'; 44") mit zu den Kontaktflächen (62; 62") des Ultraschallwandlermoduls (46; 46';46", 46‴; 46⁽⁴⁾) komplementären Kontaktflächen (66; 66"), und
Verlöten der Kontaktflächen (62; 62") und der komplementären Kontaktflächen (66; 66").

## Claims

1. Ultrasonic sensor for detection and/or examination of value documents (12) with an ultrasonic transducer module (46; 46'; 46"; 46‴; 46⁽⁴⁾) and a connection support (44; 44', 44"), wherein the ultrasonic transducer module (46; 46'; 46"; 46‴; 46⁽⁴⁾) comprises at least one piezoelectric ultrasonic transducer (52) with electrical connecting strands (54) and a mounting module (50; 50'; 50"; 50‴; 50⁽⁴⁾) for holding the at least one ultrasonic transducer (52) for mounting on the connection support (44; 44"; 44‴), wherein the mounting module (50; 50'; 50"; 50‴; 50⁽⁴⁾) has conducting paths (60; 60"; 60⁽⁴⁾) which are electrically connected to the connecting strands (54) of the at least one ultrasonic transducer (52) and which have contact areas (62; 62"),
wherein the connection support (44; 44', 44") has contact areas (66, 66") complementary to the contact areas (62; 62"),
wherein the contact areas (62; 62") are so configured that the ultrasonic transducer module (46) is placeable for mounting onto a surface (64) of the connection support (44) on which surface there are located contact areas (66, 66") complementary to the contact areas (62; 62") and the contact areas (62; 62") and the complementary contact areas (66, 66") are solderable to each other,
wherein the contact areas (62, 62") of the ultrasonic transducer module (46; 46'; 46"; 46‴; 46⁽⁴⁾) and the complementary contact areas (66; 66") of the connection support (44; 44'; 44") are soldered together.

2. The ultrasonic sensor according to claim 1, wherein the ultrasonic transducer module (46; 46'; 46"; 46‴; 46⁽⁴⁾) has, in addition to the at least one ultrasonic transducer (52), a further piezoelectric ultrasonic transducer (52) with electrical connecting strands (54), and the mounting module (50; 50"; 50⁽⁴⁾) is configured for holding the ultrasonic transducers and has conducting paths (60; 60⁽⁴⁾) which are electrically connected to the connecting strands (54) of the further ultrasonic transducer (52) and have further contact areas (62) which are so configured that the ultrasonic transducer module (46) is placeable for mounting onto the surface of the connection support on which surface there are located further contact areas (66; 66") complementary to the further contact areas (62; 62"), and the further contact areas (62; 62") and the further complementary contact areas (66; 66") are solderable to each other.

3. The ultrasonic sensor according to claim 1 or 2, wherein the mounting module (50; 50'; 50"; 50‴) of the ultrasonic transducer module (46; 46'; 46"; 46‴; 46⁽⁴⁾) has a transducer holder (56; 56") in which the ultrasonic transducer (52) is held or the ultrasonic transducers (52) are held, and a circuit board (58; 58'; 58"; 58‴) connected to the transducer holder (56) and having the conducting paths (60).

4. The ultrasonic sensor according claim 3, wherein the circuit board (58; 58'; 58"; 58‴) of the ultrasonic transducer module (46; 46'; 46"; 46‴; 46⁽⁴⁾) has at least one through bore (68) through which the connecting strands (54) of the ultrasonic transducer (52) are guided, or has through bores (68) through which the connecting strands (54) of the ultrasonic transducers (52) are guided.

5. The ultrasonic sensor according to claim 1 or claim 2, wherein the mounting module (50⁽⁴⁾) of the ultrasonic transducer module (46; 46'; 46"; 46‴; 46⁽⁴⁾) has a one-pieced holding element (56⁽⁴⁾) in which and/or on the surface of which the conducting paths (60⁽⁴⁾) extend.

6. The ultrasonic sensor according to claim 2 or any of claims 3 to 5 and claim 2, wherein the ultrasonic transducers (52) of the ultrasonic transducer module (46; 46'; 46"; 46‴; 46⁽⁴⁾) respectively have a transmission or reception characteristic for ultrasound, and the transmission and reception characteristics of the ultrasonic transducers (52) are aligned parallel to each other.

7. The ultrasonic sensor according to any of the previous claims, wherein the mounting module (50"; 50‴) of the ultrasonic transducer module (46; 46'; 46"; 46‴; 46⁽⁴⁾) has at least one positioning element (76; 76') by means of which and of a complementary positioning element (78; 78') on or in the connection support (44") the mounting module (50") is positionable on the connection support (44").

8. The ultrasonic sensor according to any of the previous claims, wherein the mounting module (50‴) of the ultrasonic transducer module (46; 46'; 46"; 46‴; 46⁽⁴⁾) has a snapping or locking element (76'), or wherein the positioning element (76') is configured as a snapping or locking element, by means of which the mounting module (50‴) is fastenable on the connection support (44‴).

9. The ultrasonic sensor according to claim 3 or claim 4, wherein in the ultrasonic transducer module (46; 46'; 46"; 46‴; 46⁽⁴⁾) the one or more ultrasonic transducers (52) are held by the transducer holder (56, 56'; 56"; 56‴; 56⁽⁴⁾) so as to be decoupled at least partly for vibrations, in particular in the ultrasonic frequency range.

10. A method for manufacturing an ultrasonic sensor for detection and/or examination of value documents (12) according to any of the preceding claims having the steps of:
manufacturing the ultrasonic transducer module (46; 46'; 46", 46'"; 46⁽⁴⁾),
checking the contacting between the connecting strands (54) and the contact areas (62; 62") of the mounting module (50; 50'; 50", 50‴, 50⁽⁴⁾,
placing the ultrasonic transducer module (46; 46'; 46", 46‴; 46⁽⁴⁾) onto the connection support (44; 44'; 44") with contact areas (66; 66") complementary to the contact areas (62; 62") of the ultrasonic transducer module (46; 46'; 46", 46‴; 46⁽⁴⁾), and
soldering the contact areas (62; 62") and the complementary contact areas (66; 66").

## Revendications

1. Capteur ultrasonique destiné à la détection et/ou à l'examen de documents de valeur (12), ayant un module de transducteur ultrasonique (46; 46'; 46"; 46'"; 46⁽⁴⁾) et un support de raccordement (44; 44'; 44"),
cependant que le module de transducteur ultrasonique (46; 46'; 46"; 46'"; 46⁽⁴⁾) comprend au moins un transducteur ultrasonique (52) piézoélectrique à torons électriques de raccordement (54) et un module de montage (50; 50'; 50"; 50'"; 50⁽⁴⁾) pour le maintien du au moins un transducteur ultrasonique (52) pour le montage sur le support de raccordement (44; 44"; 44'"), cependant que le module de montage (50; 50'; 50"; 50'"; 50⁽⁴⁾) comporte des pistes conductrices (60; 60"; 60⁽⁴⁾) qui sont reliées électriquement aux torons de raccordement (54) du au moins un transducteur ultrasonique (52) et qui comportent des surfaces de contact (62; 62"),
cependant que le support de raccordement (44; 44'; 44") comporte des surfaces de contact (66; 66") complémentaires aux surfaces de contact (62; 62"),
cependant que les surfaces de contact (62; 62") sont réalisées de telle façon que le module de transducteur ultrasonique (46), pour le montage sur une surface (64) du support de raccordement (44) sur laquelle se trouvent les surfaces de contact (66; 66") complémentaires aux surfaces de contact (62; 62"), peut être placé, et les surfaces de contact (62; 62") et les surfaces de contact (66; 66") complémentaires peuvent être soudées ensemble,
cependant que les surfaces de contact (62; 62") du module de transducteur ultrasonique (46; 46'; 46"; 46'"; 46⁽⁴⁾) et les surfaces de contact (66; 66") complémentaires du support de raccordement (44; 44'; 44") sont soudées ensemble.

2. Capteur ultrasonique selon la revendication 1, dans lequel le module de transducteur ultrasonique (46; 46'; 46"; 46'"; 46⁽⁴⁾) comporte, en plus du au moins un transducteur ultrasonique (52), un autre transducteur ultrasonique piézoélectrique (52) à torons électriques de raccordement (54), et le module de montage (50; 50"; 50⁽⁴⁾) est conçu pour le maintien du transducteur ultrasonique et comporte des pistes conductrices (60; 60⁽⁴⁾) qui sont reliées électriquement aux torons de raccordement (54) de l'autre transducteur ultrasonique (52) et qui comportent d'autres surfaces de contact (62) qui sont conçues de telle façon que le module de transducteur ultrasonique (46), pour le montage sur la surface du support de raccordement sur laquelle se trouvent d'autres surfaces de contact (66; 66") complémentaires en plus des autres surfaces de contact (62; 62"), peut être placé, et les autres surfaces de contact (62; 62") et les autres surfaces de contact (66; 66") complémentaires peuvent être soudées ensemble.

3. Capteur ultrasonique selon la revendication 1 ou 2, dans lequel le module de montage (50; 50'; 50"; 50‴) du module de transducteur ultrasonique (46; 46'; 46"; 46'"; 46⁽⁴⁾) comporte un porte-transducteur (56; 56") dans lequel le transducteur ultrasonique (52) est maintenu ou les transducteurs ultrasoniques (52) sont maintenus, et une plaque conductrice (58; 58'; 58"; 58‴) ayant les pistes conductrices (60) reliée au porte-transducteur (56).

4. Capteur ultrasonique selon la revendication 3, dans lequel la plaque conductrice (58; 58'; 58"; 58‴) du module de transducteur ultrasonique (46; 46'; 46"; 46'"; 46⁽⁴⁾) comporte au moins un perçage traversant (68) à travers lequel les torons de raccordement (54) du transducteur ultrasonique (52) sont guidés, ou comporte des perçages traversants (68) à travers lesquels les torons de raccordement (54) du transducteur ultrasonique (52) sont guidés.

5. Capteur ultrasonique selon la revendication 1 ou selon la revendication 2, dans lequel le module de montage (50⁽⁴⁾) du module de transducteur ultrasonique (46; 46'; 46"; 46'"; 46⁽⁴⁾) comporte un élément de maintien (56⁽⁴⁾) d'un seul tenant dans lequel et/ou sur la surface duquel passent les pistes conductrices (60⁽⁴⁾).

6. Capteur ultrasonique selon la revendication 2 ou une des revendications de 3 à 5 et la revendication 2, dans lequel les transducteurs ultrasoniques (52) du module de transducteur ultrasonique (46; 46'; 46"; 46'"; 46⁽⁴⁾) comportent respectivement une caractéristique d'émission ou de réception pour ultrasons, et les caractéristiques d'émission ou de réception des transducteurs ultrasoniques (52) sont orientées parallèlement les unes aux autres.

7. Capteur ultrasonique selon une des revendications précédentes, dans lequel le module de montage (50"; 50'") du module de transducteur ultrasonique (46; 46'; 46"; 46'"; 46⁽⁴⁾) comporte au moins un élément de positionnement (76; 76') au moyen duquel et un élément de positionnement (78; 78') complémentaire au moyen duquel, sur ou dans le support de raccordement (44"), l'élément de montage (50") peut être positionné sur le support de raccordement (44").

8. Capteur ultrasonique selon une des revendications précédentes, dans lequel le module de montage (50'") du module de transducteur ultrasonique (46; 46'; 46"; 46'"; 46⁽⁴⁾) comporte un élément d'encrantage ou d'encliquetage (76') ou dans lequel l'élément de positionnement (76') est réalisé sous forme d'élément d'encrantage ou d'encliquetage, au moyen duquel le module de montage (50'") peut être fixé sur le support de raccordement (44‴).

9. Capteur ultrasonique selon la revendication 3 ou la revendication 4, cependant que, dans le module de transducteur ultrasonique (46; 46'; 46"; 46'"; 46⁽⁴⁾), le ou les transducteurs ultrasoniques (52) sont maintenus de manière découplée du porte-transducteur (56; 56'; 56"; 56'"; 46⁽⁴⁾) au moins partiellement pour des oscillations, en particulier dans la plage de fréquence ultrasonique.

10. Procédé de fabrication d'un capteur ultrasonique selon une des revendications précédentes pour la détection et/ou l'examen de documents de valeur (12), comprenant les étapes :
fabrication du module de transducteur ultrasonique (46; 46'; 46"; 46'"; 46⁽⁴⁾),
vérification de la mise en contact entre les torons de raccordement (54) et les surfaces de contact (62; 62") du module de montage (50; 50'; 50"; 50'"; 50⁽⁴⁾),
placement du module de transducteur ultrasonique (46; 46'; 46"; 46'"; 46⁽⁴⁾) sur le support de raccordement (44; 44'; 44") ayant des surfaces de contact (66; 66") complémentaires aux surfaces de contact (62; 62") du module de transducteur ultrasonique (46; 46'; 46"; 46'"; 46⁽⁴⁾), et
soudage des surfaces de contact (62; 62"), et des surfaces de contact (66; 66") complémentaires.
